# EUROPÄISCHE PATENTSCHRIFT

(11) **EP 4 512 605 B1**
(45) Veröffentlichungstag und Bekanntmachung des Hinweises auf die Patenterteilung: **16.09.2026**
(21) Anmeldenummer: 24205216.5
(22) Anmeldetag: 16.02.2018
(51) Int. Cl.: B24B 13/00, B24B 13/005, B23Q 7/14, B29D 11/00

(54) **ANLAGE UND VERFAHREN ZUR BEARBEITUNG OPTISCHER LINSEN**
SYSTEM AND METHOD FOR PROCESSING OPTICAL LENSES
INSTALLATION ET PROCÉDÉ D'USINAGE DE LENTILLES OPTIQUES

(30) Priorität: 22.02.2017 DE 102017001680
(43) Veröffentlichungstag der Anmeldung: 26.02.2025
(62) Dokumentnummer(n) der früheren Anmeldung(en) nach Art. 76 EPÜ: 18706699.8 / 3 585 560
(73) Patentinhaber: Schneider GmbH & Co. KG, 35112 Fronhausen (DE)
(72) Erfinder: HUTTENHUIS, Stephan, 35096 Niederweimar (DE); SCHNEIDER, Gunter, 35037 Marburg (DE)
(74) Vertreter: Von Rohr Patentanwälte Partnerschaft mbB

(56) Entgegenhaltungen:
- DE-A1- 102004 021 696
- US-A1- 2004 235 397
- BEAT KONRAD: "On-block Manufacturing Back side processing advantages", 6 May 2016 (2016-05-06), pages 1 - 23, XP055471305, Retrieved from the Internet <URL:http://www.satisloh.com/fileadmin/contents/Whitepaper/On-Block-Manufacturing_EN.pdf> [retrieved on 20180427]

## Beschreibung

Die vorliegende Erfindung betrifft eine Anlage zur Bearbeitung von Linsen gemäß dem Oberbegriff des Anspruchs 1 sowie ein Verfahren zur Bearbeitung von Linsen gemäß dem Oberbegriff des Anspruchs 13.

Linsen, insbesondere Brillengläser, werden zur Bearbeitung üblicherweise an einem sogenannten Blockstück als Halter mittels eines sogenannten Blockmaterials geblockt, also befestigt bzw. gehalten. Das Blockstück dient dazu, die daran befestigte - also geblockte - Linse sehr präzise und definiert für einige oder mehrere Bearbeitungen zu halten. Danach wird die Linse wieder abgeblockt, also von dem Blockstück gelöst. Im Hinblick auf eine kostengünstige Linsenfertigung soll dies auf einfache Weise effizient und schnell erfolgen.

Als Blockmaterial können Legierungen mit niedriger Schmelztemperatur und Thermoplaste, also thermoplastische Materialien, oder nicht-thermoplastische Materialien, insbesondere aushärtende Klebstoffe, aber auch Klebebänder oder dergleichen eingesetzt werden. Je nach eingesetztem Blockmaterial ergeben sich unterschiedliche Anforderungen bzw. Verfahrensabläufe beim Abblocken, also Lösen der Linse von dem Blockstück bzw. Blockmaterial.

Die DE 103 53 553 A1 offenbart eine Anlage und ein Verfahren zum Abblocken von Brillengläsern, also Linsen für Brillen, wobei die Linsen mittels einer bandartigen Fördereinrichtung zum Abblocken durch ein temperiertes Wasserbad und dann nach dem Trennen vom Blockstück kontinuierlich nacheinander durch mehrere Reinigungseinrichtungen geführt bzw. gefördert werden. Diese Anlage baut relativ groß und gestattet keinen optimalen Durchsatz.

Die US 2004/0235397 A1 betrifft einen Container für eine Produktionsstätte zur Fertigung von individuellen Brillengläsern nach Rezept, die eine Mehrzahl von Arbeitsstationen aufweist, zwischen denen die Brillengläser mittels Transportkästen transportierbar sind, welche jeweils zur Aufnahme eines rechten und eines linken Brillenglases sowie ggf. zugehöriger Bearbeitungswerkzeuge ausgebildet sind. Der Container wird von einer Bedienperson von Hand zwischen zwei Arbeitsstationen bewegt.

Die vorliegende Erfindung betrifft insbesondere eine Anlage und ein Verfahren mit mehreren Bearbeitungsvorrichtungen und/oder mit mindestens einer Bearbeitungslinie zur Bearbeitung von optischen Linsen, besonders bevorzugt Brillengläsern. Die Anlage bzw. Bearbeitungslinie umfasst insbesondere mehrere, insbesondere (weitgehend) unabhängig arbeitende Bearbeitungsvorrichtungen. Besonders bevorzugt umfasst die Bearbeitungslinie (auch) mehrere Bearbeitungsvorrichtungen für die gleiche Bearbeitung, um beispielsweise den Durchsatz zu erhöhen.

Die WO 2013/131656 A2 offenbart eine Anlage und ein Verfahren zum Bearbeiten optischer Linsen, wobei Linsen oder Transportträger mit Linsen unabhängig arbeitenden Bearbeitungsvorrichtungen wahlweise zugefördert werden, die eine Bearbeitungslinie bilden.

Der vorliegenden Erfindung liegt die Aufgabe zugrunde, eine Anlage und ein Verfahren zur Bearbeitung optischer Linsen anzugeben, wobei ein besonders effizienter Verfahrensablauf ermöglicht wird.

Die obige Aufgabe wird durch eine Anlage gemäß Anspruch 1 oder durch ein Verfahren gemäß Anspruch 13 gelöst. Vorteilhafte Weiterbildungen sind Gegenstand der Unteransprüche.

Besonders bevorzugt werden die Linsen in oder auf bzw. mittels Transportträgern von einer Blockvorrichtung zu einer oder mehreren Bearbeitungsvorrichtungen bzw. Bearbeitungslinien zur Bearbeitung der Linsen und schließlich wieder zu einer Abblockvorrichtung zum Abblocken der bearbeiteten Linsen gefördert. Insbesondere weist die Anlage ein Transportsystem zur Förderung der Linsen bzw. Transportträger auf.

Gemäß einem ersten Aspekt der vorliegenden Erfindung weist die Anlage vorzugsweise eine Kommissioniervorrichtung zur Bestückung der Transportträger mit zu bearbeitenden Linsen und mit zugeordneten Blockstücken auf. Dies ermöglicht einen vollautomatisierten und damit optimierten Verfahrensablauf.

Besonders bevorzugt werden oder sind die Transportträger mit einem Informationsträger, insbesondere Datenträger, Barcode o.dgl., ausgebildet bzw. versehen, der erforderliche Informationen für die Bearbeitung enthält oder zugänglich macht. Die Informationen bzw. Informationsträger werden besonders bevorzugt von der Kommissioniervorrichtung bereitgestellt, angebracht, geprüft, aktualisiert und/oder ausgetauscht. Besonders bevorzugt sind die Informationsträger elektronisch oder optisch lesbar. Die Informationen können insbesondere auch Bearbeitungsstatus, Auftragsnummern, Angaben zu den verwendeten Blockstücken und dergleichen enthalten oder zugänglich machen.

Gemäß einem zweiten, auch unabhängig realisierbaren Aspekt der vorliegenden Erfindung weist die Anlage vorzugsweise mindestens eine Rückfördervorrichtung zur Rückförderung der abgeblockten Blockstücke und/oder der Transportträger zu der Kommissioniervorrichtung auf. Dies gestattet einen automatisierten und optimierten Verfahrensablauf.

Bedarfsweise können die abgeblockten Blockstücke auch bzw. in oder mit den Transportträgern wieder zu der Kommissioniervorrichtung rückgefördert werden.

Alternativ kann die Rückförderung der Blockstücke und Transportträger separat - insbesondere also mit getrennten Rückfördervorrichtungen - erfolgen. Dies erfolgt insbesondere dann, wenn die Transportträger nach dem Abblocken weiter für den Transport der abgeblockten Linsen eingesetzt werden.

Nach dem Abblocken erfolgt vorzugsweise eine weitere Bearbeitung der Linsen, insbesondere ein Reinigen, ein Beschichten und/oder eine Randbearbeitung oder dergleichen. Auch hierzu können die Linsen in oder auf bzw. mittels Transportträgern von einer Vorrichtung zur nächsten befördert werden. Diese Transportträger können den vorgenannten entsprechen. Alternativ können hierzu auch zusätzliche Transportträger gemäß Zusatztyp eingesetzt werden, die anders, insbesondere kleiner, als die ursprünglichen Transportträger gemäß Standardtyp ausgebildet sind.

Vorzugsweise weist die Anlage eine Vorrichtung zum Reinigen der Transportträger gemäß Standardtyp und/oder Zusatztyp auf. Insbesondere ist die Vorrichtung in die Abblockvorrichtung, die Kommissioniervorrichtung oder eine sonstige Vorrichtung, wie eine optionale Speichervorrichtung zur Zwischenspeicherung von Transportträgern, integriert. Jedoch kann es sich auch eine um eine separate Vorrichtung handeln.

Vorzugsweise weist die Anlage eine Vorrichtung zur insbesondere optischen Überprüfung der Transportträger gemäß Standardtyp und/oder Zusatztyp auf. Die Vorrichtung ist insbesondere in die Abblockvorrichtung, die Kommissioniervorrichtung oder eine sonstige Vorrichtung, wie eine Speichervorrichtung, integriert. Jedoch kann es sich auch um eine separate Vorrichtung handeln.

Vorzugsweise weist die Anlage eine Vorrichtung zur insbesondere optischen Überprüfung der Blockstücke auf. Die Vorrichtung ist insbesondere in die Abblockvorrichtung, die Kommissioniervorrichtung und/oder eine sonstige Vorrichtung, wie eine Speichervorrichtung, die insbesondere der Zwischenspeicherung von Blockstücken dient, integriert. Jedoch kann es sich auch um eine separate Vorrichtung handeln.

Vorzugsweise weist die Anlage eine Vorrichtung zur Sortierung der Blockstücke nach Größe und/oder Form auf. Die Vorrichtung ist insbesondere in die Abblockvorrichtung, die Kommissioniervorrichtung oder eine sonstige Vorrichtung, wie eine Speichervorrichtung für Blockstücke, integriert. Jedoch kann es sich auch um eine separate Vorrichtung handeln.

Sofern zusätzliche Transportträger nach dem Abblocken für die Förderung bzw. den Transport der abgeblockten Linsen, insbesondere zur weiteren Bearbeitung, eingesetzt werden, weist die Anlage vorzugsweise eine zusätzliche Rückfördervorrichtung zur Rückförderung der Transportträger gemäß Zusatztyp insbesondere zu der Abblockvorrichtung auf. So wird insbesondere auch eine Zirkulation oder Kreisförderung der zusätzlichen Transportträger ermöglicht.

Gemäß einem dritten, auch unabhängig realisierbaren Aspekt der vorliegenden Erfindung wird bzw. werden vorschlagsgemäß durch die Anlage bzw. das Verfahren insbesondere ein erster und/oder zweiter Kreislauf für die Transportträger und/oder ein eigener, weiterer bzw. dritter Kreislauf für die Blockstücke gebildet. Insbesondere können zwei getrennte Kreisläufe für die Transportträger des Standardtyps einerseits und die Transportträger des Zusatztyps andererseits gebildet werden. Dies ist einem automatisierten und optimierten Verfahrensablauf zuträglich.

Gemäß einem vierten, auch unabhängig realisierbaren Aspekt der vorliegenden Erfindung werden die Transportträger und/oder abgeblockten Blockstücke direkt zu der Blockvorrichtung gefördert. Weiter erfolgt dann eine entsprechende Zuförderung der zu bearbeitenden Linsen zu der Blockvorrichtung. Nach dem Blocken werden die Transportträger mit den geblockten Linsen maschinell bestückt. Dies gestattet ebenfalls einen automatisierten und optimierten Verfahrensablauf.

Gemäß einem fünften, auch unabhängig realisierbaren Aspekt der vorliegenden Erfindung zeichnet sich ein vorschlagsgemäßes Verfahren insbesondere dadurch aus, dass die Linsen in oder auf Transportträgern von der Blockvorrichtung zu den Bearbeitungsvorrichtungen und der Abblockvorrichtung gefördert werden, wobei die Transportträger nach ihrer Benutzung, insbesondere nach dem Abblocken oder direkt von der Abblockvorrichtung, mittels einer Rückfördervorrichtung rückgefördert werden und entweder in der Blockvorrichtung mit zu bearbeitenden, geblockten Linsen und/oder in der Kommissioniervorrichtung mit zu bearbeitenden bzw. ungeblockten Linsen und optionalen Blockstücken bestückt werden. Dies gestattet einen automatisierten und damit optimierten Verfahrensablauf.

Gemäß einem sechsten, auch unabhängig realisierbaren Aspekt der vorliegenden Erfindung werden die abgeblockten Blockstücke mittels Transportträgern und/oder einer Rückfördervorrichtung von der Abblockvorrichtung zu der Kommissioniervorrichtung oder direkt zu der Blockvorrichtung rückgefördert. Besonders bevorzugt werden die Blockstücke optional zwischengespeichert und/oder in der Kommissioniervorrichtung, sofern erforderlich, ausgetauscht bzw. zwischengespeichert. Dies gestattet einen automatisierten und damit optimierten Verfahrensablauf.

Vorzugsweise werden die Informationen bzw. Informationsträger, mit denen die Transportträger bzw. deren Informationsträger optional versehen sind, wieder automatisiert gelöscht oder entfernt oder aktualisiert bzw. ausgetauscht. Dies kann beispielsweise in der Abblockvorrichtung oder bei der letzten Bearbeitungsvorrichtung, bei der Reinigung, beim insbesondere optischen Überprüfen und/oder beim Neubestücken, insbesondere in der Kommissioniervorrichtung, erfolgen.

Besonders bevorzugt werden die Transportträger, insbesondere vom Standardtyp und/oder Zusatztyp, gereinigt und/oder optisch überprüft. Dies erfolgt automatisiert, so dass ein optimierter Verfahrensablauf ermöglicht wird.

Vorzugsweise werden die abgeblockten Blockstücke maschinell gereinigt und/oder optisch überprüft. Dies erfolgt insbesondere maschinell, so dass ein automatisierter und damit optimierter Verfahrensablauf ermöglicht wird.

Besonders bevorzugt werden die abgeblockten, also benutzten Blockstücke hinsichtlich ihrer Größe und/oder Form sortiert und/oder überprüft. Dies erfolgt insbesondere maschinell, so dass ein automatisierter und damit optimierter Verfahrensablauf ermöglicht wird. Anschließend werden die Blockstücke vorzugsweise wiederverwendet.

Gemäß einem siebten, auch unabhängig realisierbaren Aspekt der vorliegenden Erfindung ist es auch möglich, die abgeblockten, also benutzten Blockstücke wieder "aufzuarbeiten". Dies kann durch eine formgebende bzw. mechanische Bearbeitung erfolgen, beispielsweise wenn das Blockmaterial aushärtet und sich mit dem Blockstück fest, dauerhaft bzw. unlösbar verbindet.

Die aufgearbeiteten bzw. überprüften Blockstücke werden dann wieder verwendet, insbesondere wieder der Blockvorrichtung zugeführt. Insbesondere erfolgt die Zuführung wieder über die Kommissioniervorrichtung, wo die Transportträger mit den Blockstücken zusammen mit den zu bearbeitenden Linsen bestückt und dann der Blockvorrichtung zugefördert werden.

Jedoch sind auch andere Förderabläufe möglich. Insbesondere können die Blockstücke und zu bearbeitenden Linsen bedarfsweise auch getrennt der Blockvorrichtung zugefördert werden.

Gemäß einem achten, auch unabhängig realisierbaren Aspekt der vorliegenden Erfindung ist es auch möglich, dass die Linsen auf ihrer Blockseite - insbesondere erst unmittelbar - vor dem Blocken bzw. in der Anlage mit einer Schutzschicht oder Schutzfolie versehen werden und dass die Schutzschicht bzw. Schutzfolie nach dem Abblocken der jeweiligen Linse wieder entfernt wird, insbesondere in der Abblockvorrichtung und/oder vor einem Beschichten der Blockseite und/oder vor einer weiteren Bearbeitung, besonders bevorzugt Randbearbeitung, der jeweiligen Linse. Dies gestattet einen optimierten und/oder vollautomatisierten Verfahrensablauf.

Weitere Aspekte, Merkmale, Vorteile und Eigenschaften der vorliegenden Erfindung ergeben sich aus den Ansprüchen und der nachfolgenden Beschreibung bevorzugter Ausführungsformen anhand der Zeichnung. Es zeigt:
- Fig. 1: eine schematische Darstellung einer vorschlagsgemäßen Anlage mit mehreren Bearbeitungsvorrichtungen gemäß einer ersten Ausführungsform;
- Fig. 2: einen schematischen Schnitt einer geblockten Linse 2; und
- Fig. 3: eine schematische Darstellung einer vorschlagsgemäßen Anlage gemäß einer zweiten Ausführungsform.

In den Figuren werden für gleiche oder gleichartige Komponenten und Einrichtungen die gleichen Bezugszeichen verwendet, wobei sich die gleichen oder entsprechenden Vorteile und Eigenschaften ergeben, auch wenn eine wiederholte Beschreibung weggelassen ist.

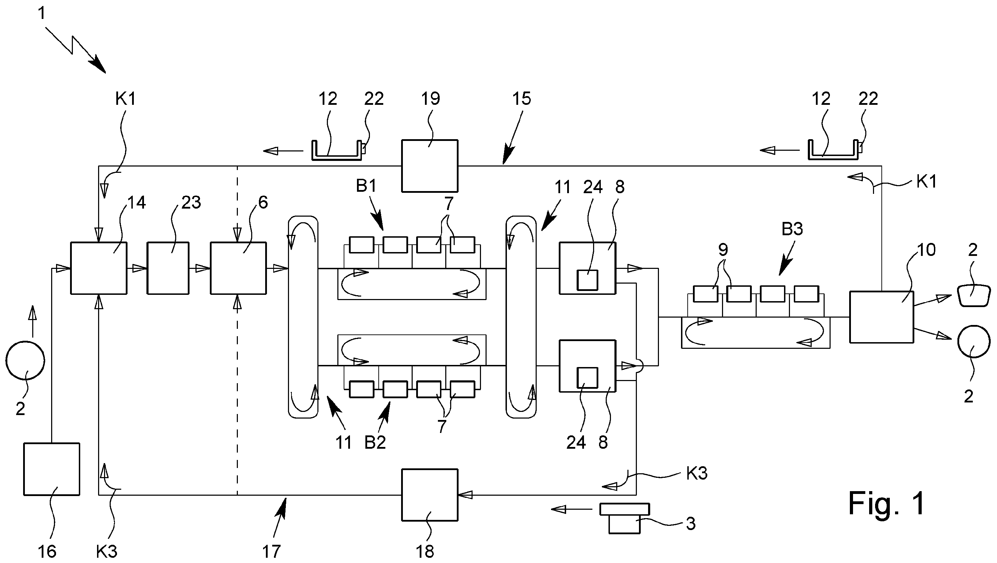

Fig. 1 zeigt in einer schematischen Darstellung eine vorschlagsgemäße Anlage 1 zur Bearbeitung von optischen Linsen 2, also eine Linsenbearbeitungsanlage.

Besonders bevorzugt handelt es sich bei der Linse 2 um ein sogenanntes Brillenglas, also eine Linse für eine Brille.

Die Linse 2 besteht vorzugsweise aus Kunststoff, kann gegebenenfalls aber auch aus Glas oder dergleichen bestehen.

Die Linse 2 weist vorzugsweise einen Durchmesser von mehreren Zentimetern, insbesondere von mehr als 3 cm auf.

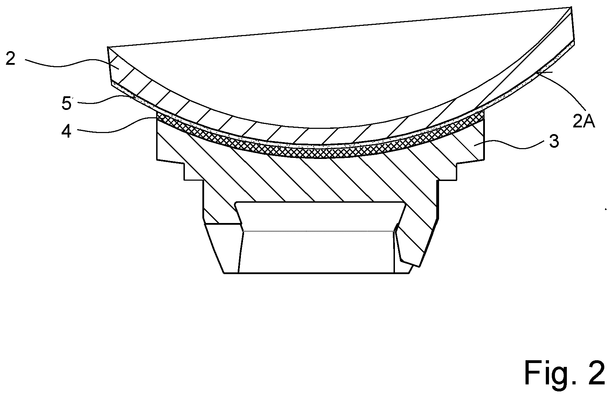

Fig. 2 zeigt in einem schematischen Schnitt eine Linse 2, die auf einem zugeordneten Blockstück 3 mittels eines Blockmaterials 4 geblockt, also temporär befestigt, ist.

Das Blockstück 3 ist insbesondere zu einer Einspannung mit definierter Drehlage für eine Bearbeitung der zugeordneten Linse 2 ausgebildet.

Das Blockmaterial 4 ist besonders bevorzugt ein Thermoplast, wie insbesondere in der WO 2011/018231 A1 beschrieben. Grundsätzlich kann es sich aber auch um eine Legierung mit niedrigem Schmelzpunkt oder um ein sonstiges Material, beispielsweise einen Klebstoff, einen Klebestreifen oder dergleichen, handeln.

Optional ist auf der dem Blockmaterial 4 bzw. Blockstück 3 zugewandten Seite bzw. Blockseite 2A der Linse 2 eine Schutzschicht bzw. Schutzfolie 5 angeordnet oder vorgesehen, wie in Fig. 2 schematisch angedeutet. Die Schutzfolie 5 ist insbesondere auf die Linse 2 bzw. Blockseite 2A der Linse 2 aufgeklebt und dient insbesondere einem Schutz dieser schon fertig bearbeiteten bzw. geformten Flachseite bzw. Blockseite 2A der Linse 2.

Grundsätzlich ist es jedoch auch möglich, die Linse 2 ohne die Schutzschicht bzw. Schutzfolie 5 direkt mittels des Blockmaterials 4 zu blocken.

Die vorschlagsgemäße Anlage 1 weist vorzugsweise eine Blockvorrichtung 6 zum Blocken - also temporären Befestigen - einer zu bearbeitenden Linse 2 an einem zugeordneten Blockstück 3 mittels des Blockmaterials 4 auf.

Die Anlage 1 weist vorzugsweise eine oder mehrere Bearbeitungsvorrichtungen 7, 9 zur Bearbeitung der insbesondere geblockten Linsen 2 auf.

Die Bearbeitungsvorrichtungen 7, 9 sind insbesondere als separate Bearbeitungsvorrichtungen und/oder zur unabhängigen Bearbeitung der Linsen 2 ausgebildet.

Die Bearbeitungsvorrichtungen 7, 9 dienen insbesondere unterschiedlichen Bearbeitungen. Weiter sind vorzugsweise einige oder mehrere Bearbeitungsvorrichtungen 7, 9 zur gleichen Bearbeitung ausgebildet, um unter Berücksichtigung der Zeit für eine Bearbeitung einen höheren Durchsatz und/oder eine Redundanz bei Ausfall einer Bearbeitungsvorrichtung 7, 9 zu erreichen.

Die Bearbeitungsvorrichtungen 7, 9 ermöglichen beispielsweise eine formgebende, insbesondere mechanische bzw. spanende oder fräsende Bearbeitung einer Flachseite oder optisch wirksamen Seite der Linsen 2, eine Randbearbeitung der Linsen 2, ein Polieren der Linsen 2, ein Prüfen bzw. Messen der Linsen 2, ein Markieren von Linsen 2 und/oder ein Beschichten von Linsen 2.

Bedarfsweise können auch mehrere gleichartige Bearbeitungsvorrichtungen 7, 9, beispielsweise zwei oder mehr Bearbeitungsvorrichtungen 7, 9 für die gleiche Bearbeitung, vorhanden bzw. in die Anlage 1 integriert sein. Beispielsweise können mehrere Bearbeitungsvorrichtungen 7 zur formgebenden Bearbeitung oder mehrere Bearbeitungsvorrichtungen 7 zum Polieren vorgegeben sein. Dies hängt insbesondere von dem Durchsatz der verschiedenen Bearbeitungsvorrichtungen 7 und/oder den gewünschten Bearbeitungen ab.

Ein besonderer Vorteil der vorschlagsgemäßen Anlage 1 besteht darin, dass zusätzliche Bearbeitungsvorrichtungen 7, 9 auch später je nach Bedarf noch in die Anlage 1 sehr leicht integriert bzw. eingebunden werden können, Erweiterungen also sehr einfach erfolgen können.

Besonders bevorzugt bilden mehrere Bearbeitungsvorrichtungen 7 eine Bearbeitungslinie B.

Die vorschlagsgemäße Anlage 1 weist vorzugsweise eine oder mehrere Bearbeitungslinien B auf. Insbesondere weist die Anlage 1 mindestens eine Bearbeitungslinie B1 zur Bearbeitung von geblockten Linsen 2, insbesondere zur formgebenden Bearbeitung wenigstens einer Flachseite und/oder zum Polieren, und vorzugsweise mindestens eine weitere Bearbeitungsvorrichtung 9 bzw. Bearbeitungslinie B3 zur weiteren Bearbeitung von ungeblockten Linsen 2, insbesondere zum Reinigen, zum Beschichten, zur Randbearbeitung, zum Prüfen und/oder zum Verpacken, auf. Beim Darstellungsbeispiel weist die Anlage 1 zwei Bearbeitungslinien B1 und B2 zur Bearbeitung von geblockten Linsen 2 und eine Bearbeitungslinie B3 zur weiteren Bearbeitung von ungeblockten Linsen 2 auf.

Die Anlage 1 weist vorzugsweise mindestens eine Abblockvorrichtung 8 zum Abblocken der insbesondere schon mindestens einer Bearbeitung unterzogenen Linsen 2, also zum Trennen bzw. Lösen der Linsen 2 von dem zugeordneten jeweils Blockstück 3, auf. Beim Darstellungsbeispiel weist die Anlage 1 vorzugsweise mehrere, hier zwei Abblockvorrichtungen 8 auf.

Das Abblocken erfolgt insbesondere nach der formgebenden Bearbeitung mindestens einer Flachseite bzw. optisch aktiven Seite der Linsen 2 und nach dem Polieren und/oder vor einem Beschichten und/oder vor einer Randbearbeitung der Linsen 2.

Besonders bevorzugt ist die Abblockvorrichtung 8 bzw. sind die Abblockvorrichtungen 8 der Bearbeitungslinie B1, B2 zur Bearbeitung von geblockten Linsen 2 nachgeordnet bzw. der Bearbeitungslinie B3 zur Bearbeitung von abgeblockten Linsen 2 vorgeordnet oder in die Bearbeitungslinie B1, B2 oder in die Bearbeitungslinie B3 integriert.

Nach dem Abblocken erfolgt vorzugsweise eine Entfernung der optionalen Schutzschicht bzw. Schutzfolie 5 von den Linsen 2. Hierzu weist die Anlage 1 bzw. Abblockvorrichtung 8 vorzugsweise eine Vorrichtung 24 auf, wie schematisch angedeutet. Die Vorrichtung 24 zum Entfernen der Schutzschicht bzw. Schutzfolie 5 ist insbesondere in die Abblockvorrichtung(en) 8 integriert, kann aber auch als eine separate Vorrichtung 24 ausgeführt und/oder in die nachfolgende bzw. weitere Bearbeitung oder Bearbeitungslinie B3 integriert sein.

Weiter kann auch ein zusätzliches oder für ein nachfolgendes Beschichten der Linsen 2 ausreichendes bzw. angepasstes Reinigen der abgeblockten Linsen 2 in der Abblockvorrichtung 8 bzw. Vorrichtung 24 erfolgen.

Nach dem Abblocken erfolgt vorzugsweise die weitere Bearbeitung bzw. Endbearbeitung der abgeblockten Linsen 2, insbesondere ein Reinigen, ein Beschichten, eine Randbearbeitung - besonders bevorzugt zur Anpassung an ein Brillengestell bzw. eine Brillenfassung -, ein Prüfen oder dergleichen, hier insbesondere durch die weiteren Bearbeitungsvorrichtungen 9 bzw. weitere Bearbeitungslinie B3. Schließlich erfolgt eine Abgabe der fertig bearbeiteten Linsen.

Die Anlage 1 weist vorzugsweise eine Abgabevorrichtung 10 zur Verpackung, Beschriftung, Zwischenspeicherung und/oder Abgabe der - vorzugsweise fertig - bearbeiteten Linsen 2 auf. In Fig. 1 ist schematisch angedeutet, dass die Linsen 2 je nach Bedarf bzw. erfolgter Bearbeitung als (fertig) randbearbeitete (also an ein Brillengestell angepasste) Linsen 2 oder als noch nicht randbearbeitete bzw. noch nicht an ein Brillengestell angepasste Linsen 2 ausgegeben bzw. abgegeben werden.

Die Randbearbeitung der Linsen 2 zur Anpassung an ein Brillengestell, ein Verpacken und/oder eine Qualitätssicherung bzw. Überprüfung der Linsen 2 kann bzw. können wahlweise bei der weiteren Bearbeitung, in oder nach der Abgabevorrichtung 10 bzw. Anlage 1, bedarfsweise also auch später bzw. separat erfolgen.

Die Anlage 1 weist vorzugsweise mindestens ein Transportsystem 11 zum Transport der Linsen 2 bzw. von Transportträgern 12, 13 mit den Linsen 2 zu und von den Bearbeitungsvorrichtungen 7 bzw. Bearbeitungslinien B auf.

Bei der ersten Ausführungsform gemäß Fig. 1 ist beispielhaft lediglich eine Art von Transportträger 12 dargestellt, der nachfolgend insbesondere auch als "Standardtyp" bezeichnet wird und/oder der insbesondere sowohl zur Aufnahme mindestens einer Linse 2 als auch mindestens eines Blockstücks 3, besonders bevorzugt eines Paars von Linsen 2 und von zwei Blockstücken 3, ausgebildet ist.

Das Transportsystem 11 fördert die Linsen 2 bzw. Transportträger 12, 13 insbesondere von der Blockvorrichtung 6 zu den Bearbeitungsvorrichtungen 7 bzw. zumindest einer Bearbeitungslinie B1 oder B2 und von dort zu mindestens einer Abblockvorrichtung 8 und insbesondere bzw. optional zu weiteren Bearbeitungsvorrichtungen 9 bzw. der (weiteren) Bearbeitungslinie B3 und/oder zu der Abgabevorrichtung 10, wie in Fig. 1 schematisch bzw. durch die die Förderung andeutenden Pfeile gezeigt.

Das Transportsystem 11 ist insbesondere aus mehreren Fördervorrichtungen, wie Förderbändern, Manipulationseinrichtungen oder dergleichen, aufgebaut.

Das Transportsystem 11 ist insbesondere derart aufgebaut, dass eine wahlweise Förderung der Linsen 2 bzw. Transportträger 12, 13 zu und von den einzelnen Bearbeitungslinien B1 bis B3, den einzelnen Bearbeitungsvorrichtungen 7, 9 einer Bearbeitungslinie B1, B2, B3 und/oder den Abblockvorrichtungen 8 ermöglicht wird.

Schließlich ermöglicht das Transportsystem 11 eine Förderung der Linsen 2 bzw. Transportträger 12, 13 zu der mindestens einen Abgabevorrichtung 10.

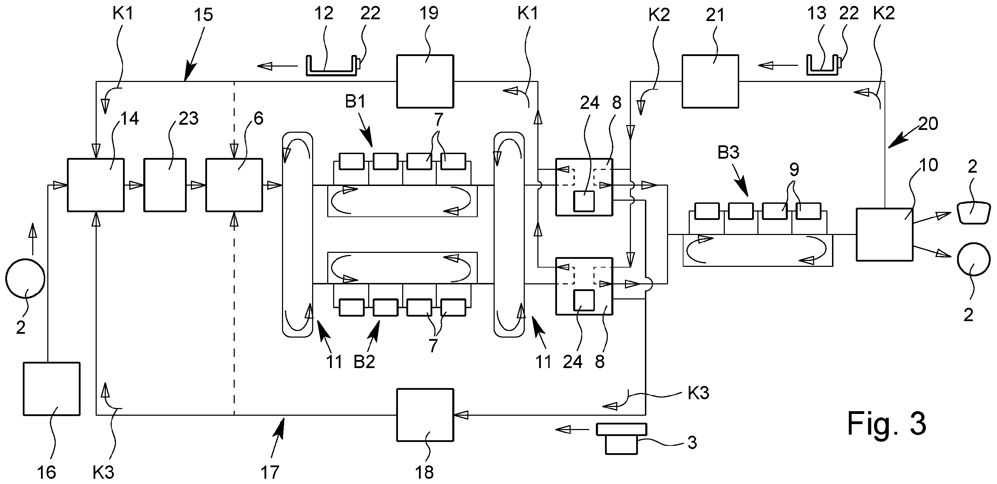

Je nach Realisierung können auch unterschiedliche Transportträger 12, 13 eingesetzt werden. Fig. 3 zeigt in einer zu Fig. 1 korrespondierenden schematischen Darstellung eine zweite Ausführungsform der vorschlagsgemäßen Anlage 1. Hier sind zwei unterschiedliche Arten von Transportträgern 12 und 13 angedeutet. Insbesondere ist zusätzlich zum Transportträger 12 vom Standardtyp auch ein weiterer Transportträger 13 angedeutet, der nachfolgend auch als "Zusatztyp" bezeichnet wird und/oder der insbesondere kleiner als der Transportträger 12 vom Standardtyp und/oder nur zur Aufnahme von ein oder zwei (ungeblockten) Linsen 2 ausgebildet ist.

Die Transportträger 12, 13 sind vorzugsweise kistenartig und/oder nach oben hin offen und/oder zur losen Aufnahme bzw. Halterung der Linsen 2 und/oder Blockstücke 3 ausgebildet.

Optional sind die Transportträger 12 und/oder 13 jeweils mit einem Informationsträger 22 zur Bereitstellung von Informationen über die jeweils mit dem Transportträger 11, 12 transportierten Linsen 2 und/oder Blockstücke 3 versehen. Die Informationen enthalten insbesondere alle für die Bearbeitung wesentlichen Angaben und/oder ermöglichen das Abrufen der für die Bearbeitung erforderlichen Angaben, beispielsweise über eine Systemsteuerung, Datenbank oder sonstige Verwaltung der Anlage 1 bzw. eines zugeordneten Linsenmanagementsystems oder dergleichen.

Die Anlage 1 weist vorzugsweise eine Kommissioniervorrichtung 14 zur insbesondere voll automatisierten oder teilautomatisierten Bestückung der Transportträger 12 mit zu bearbeitenden Linsen 2 und Blockstücken 3 auf. Die Kommissioniervorrichtung 14 ist der Blockvorrichtung 6 vorgeordnet.

Insbesondere fördert das Transportsystem 11 mit Linsen 2 und Blockstücken 3 bestückte Transportträger 12 von der Kommissioniervorrichtung 14 zu der Blockvorrichtung 6.

Optional weist die Anlage 1 eine Vorrichtung 23 zum Aufbringen der Schutzschicht bzw. Schutzfolie 5 auf die Linse 2 bzw. deren Blockseite 2A auf. Diese Vorrichtung 23 ist vorzugsweise der Kommissioniervorrichtung 14 nachgeordnet und/oder der Blockvorrichtung 6 vorgeordnet.

Die Vorrichtung 23 kann in die Kommissioniervorrichtung 14 und/oder Blockvorrichtung 6 integriert oder als separate Vorrichtung, wie in Fig. 1 angedeutet, ausgeführt sein. Im letztgenannten Fall fördert vorzugsweise das Transportsystem 11 die Linsen 2, insbesondere mittels der Transportträger 12, zunächst zu der Vorrichtung 23 zum Aufbringen der Schutzschicht bzw. Schutzfolie 5 und dann von dieser wieder weiter, insbesondere zu der Blockvorrichtung 6. Besonders bevorzugt erfolgt also eine Förderung der bestückten Transportträger 12 von der Kommissioniervorrichtung 14 zu der Vorrichtung 23 und anschließend zu der Blockvorrichtung 6. Jedoch ist es grundsätzlich auch möglich, dass die Vorrichtung 23 anders in die Anlage 1 eingebunden ist, beispielsweise der Kommissioniervorrichtung 14 vorgeordnet ist.

In der Blockvorrichtung 6 werden die Linse 2 und das zugehörige Blockstück 3 vorzugsweise automatisiert entnommen und in gewünschter Weise geblockt. Anschließend wird derselbe oder ein anderer Transportträger 12 mit der geblockten Linse 2 von der Blockvorrichtung 6 wieder bestückt.

Beim Darstellungsbeispiel trägt der Transportträger 11 vorzugsweise ein Paar von Linsen 2, insbesondere zur Bildung von zwei Brillengläsern einer Brille, und zwei zugeordnete Blockstücke 3. Entsprechend wird der Transportträger 11 nach dem Blocken von der Blockvorrichtung 6 vorzugsweise wieder mit zwei zu einer Brille gehörenden, geblockten Linsen 2 bestückt.

Es ist anzumerken, dass die Anlage 1 auch mehrere Blockvorrichtungen 6 aufweisen kann, die beispielsweise wahlweise oder je nach Auslastung oder Auslegung mit den zu blockenden Linsen 2 bzw. damit versehenen Transportträgern 12 von dem Transportsystem 11 beschickt bzw. versorgt werden.

Besonders bevorzugt werden die Transportträger 12 nach deren Benutzung wieder mittels einer (ersten) Rückfördervorrichtung 15 rückgefördert und mit zu bearbeitenden Linsen 2 (insbesondere also Linsenrohlingen) und optional Blockstücken 3 maschinell bestückt. Dies erfolgt beim Darstellungsbeispiel besonders bevorzugt in oder mittels der Kommissioniervorrichtung 14.

Alternativ ist es jedoch auch möglich, dass die Transportträger 12 nach der Benutzung bzw. mittels der Rückfördervorrichtung 15 an die Blockvorrichtung 6 rückgefördert werden, wie in Fig. 1 gestrichelt angedeutet. In diesem Fall kann die Kommissioniervorrichtung 14 entfallen. Die Transportträger 12 werden dann in der bzw. von der Blockvorrichtung 6 vorzugsweise maschinell mit den bereits geblockten Linsen 2 bestückt.

Besonders bevorzugt erfolgt die Bestückung der Transportträger 12 jedoch automatisiert in der Kommissioniervorrichtung 14.

Die zu bearbeitenden Linsen 2 bzw. Linsenrohlinge werden vorzugsweise von einer Speichervorrichtung 16 der Anlage 1 bereitgestellt, insbesondere der Kommissioniervorrichtung 14 zugefördert. Die Speichervorrichtung 16 kann insbesondere mit der Kommissioniervorrichtung 14 direkt gekoppelt oder in diese integriert sein.

Insbesondere kann ein Auspacken der Linsen 2 bzw. Linsenrohlinge teilautomatisiert oder vollautomatisiert in der bzw. durch die Speichervorrichtung 16 oder Kommissioniervorrichtung 14 erfolgen.

Die abgeblockten bzw. benutzten Blockstücke 3 werden von der Abblockvorrichtung 8 bzw. jeder Abblockvorrichtung 8 vorzugsweise wieder maschinell rückgefördert, hier insbesondere zu der Kommissioniervorrichtung 14.

Die Rückförderung erfolgt beim Darstellungsbeispiel vorzugsweise mittels einer in Fig. 1 angedeuteten (zusätzlichen) Rückfördervorrichtung 17 für Blockstücke 3.

Besonders bevorzugt werden die Blockstücke 3 nach dem Abblocken, also nach der Benutzung, gereinigt, insbesondere optisch überprüft, sortiert und/oder zwischengespeichert. Dies kann insbesondere in der Abblockvorrichtung 8 und/oder mittels einer separaten Vorrichtung 18, die in Fig. 1 schematisch angedeutet ist, und/oder in der Kommissioniervorrichtung 14 erfolgen.

Besonders bevorzugt erfolgt das Reinigen, insbesondere Entfernen von Blockmaterial 4, in der (jeweiligen) Abblockvorrichtung 8.

Das vorzugsweise optische Überprüfen der Blockstücke 3, insbesondere auf vollständiges Entfernen des Blockmaterials 4, Beschädigungen oder dergleichen erfolgt besonders bevorzugt in der Abblockvorrichtung 8 oder Vorrichtung 18.

Das Sortieren oder Überprüfen der Blockstücke 2, insbesondere nach Größe und/oder Form, erfolgt besonders bevorzugt in der Blockvorrichtung 6, der Abblockvorrichtung 8, der Vorrichtung 18 und/oder der Kommissioniervorrichtung 14.

Die optionale Zwischenspeicherung der Blockstücke 3 erfolgt besonders bevorzugt in der Abblockvorrichtung 8, der Vorrichtung 18 und/oder der Kommissioniervorrichtung 14.

Wenn die Zwischenspeicherung in der Abblockvorrichtung 8 oder Vorrichtung 18 erfolgt, werden entsprechende oder erforderliche bzw. passende Blockstücke 3 insbesondere auf entsprechende Anforderung der Blockvorrichtung 6 bzw. Kommissioniervorrichtung 14 hin bzw. bedarfsgerecht und/oder gesteuert durch ein nicht dargestelltes Linsenmanagementsystem der Anlage 1 oder dergleichen, der Kommissioniervorrichtung 14 bedarfsgerecht zugefördert.

Die Kommissioniervorrichtung 14 legt dann die zu bearbeitenden Linsen 2 und die Blockstücke 3 insbesondere von oben bzw. lose in die Transportträger 12.

Alternativ besteht auch die Möglichkeit, die abgeblockten Blockstücke 3 direkt der Blockvorrichtung 6 zuzufördern, wie in Fig. 1 gestrichelt angedeutet.

Die Transportträger 12 werden bei der in Fig. 1 dargestellten ersten Ausführungsform vorzugsweise erst von der Abgabevorrichtung 10 abgegeben bzw. freigegeben und von dort rückgefördert.

Die freigegebenen Transportträger 12 werden vorzugsweise gereinigt, mit anderen Informationen und/oder anderen Informationsträgern 22 versehen, insbesondere optisch überprüft und/oder zwischengespeichert. Dies kann insbesondere in einer der Rückfördervorrichtung 15 zugeordneten bzw. separaten Vorrichtung 19 erfolgen.

Insbesondere erfolgt die Reinigung der Transportträger 12 in der Abgabevorrichtung 10, der Vorrichtung 19, der Kommissioniervorrichtung 14, der Blockvorrichtung 6 und/oder der Abblockvorrichtung 8.

Das vorzugsweise optische Überprüfen der Transportträger 12, insbesondere im Hinblick auf eine erfolgreich durchgeführte Reinigung oder erforderliche Reinigung, auf das Austauschen oder Entfernen der Informationsträger 22, auf Beschädigungen, Verschmutzungen oder dergleichen, erfolgt vorzugsweise in der Abgabevorrichtung 10, der Vorrichtung 19, der Kommissioniervorrichtung 14, der Blockvorrichtung 6 und/oder der Abblockvorrichtung 8.

Ein optionales Zwischenspeichern der Transportträger 12 erfolgt insbesondere in der Abgabevorrichtung 10, der Vorrichtung 19 und/oder der Kommissioniervorrichtung 14. Alternativ oder zusätzlich kann die Rückfördervorrichtung 15 eine entsprechende Zwischenspeicherung, beispielsweise durch eine Ringförderung der Transportträger 12 und ein bedarfsweises Ausleiten der entsprechenden Transportträger 12 zur Weiterförderung an die Kommissioniervorrichtung 14 ermöglichen.

Besonders bevorzugt wird also insbesondere eine Kreisförderung oder ein (erster) Kreislauf K1 der Transportträger 12 ermöglicht oder realisiert.

Alternativ oder zusätzlich können die Transportträger 12 bzw. geblockten Linsen 2 auch in der ersten und/oder zweiten Bearbeitungslinie B1, B2 und/oder in der Abgabevorrichtung 11 - besonders bevorzugt zur Zwischenspeicherung - zirkulieren bzw. im Kreislauf gefördert werden.

Alternativ oder zusätzlich können auch die abgeblockten Linsen 2 und/oder Transportträger 12 in der weiteren bzw. dritten Bearbeitungslinie 3 - insbesondere zur Zwischenspeicherung - zirkulieren bzw. im Kreislauf gefördert werden.

Besonders bevorzugt wird eine Kreisförderung oder ein (dritter bzw. weiterer) Kreislauf K3 der Blockstücke 3 ermöglicht oder realisiert.

Insbesondere können die Blockstücke 3 auch mittels nicht dargestellter Transportträger von der (jeweiligen) Abblockvorrichtung 8 wieder zum Blocken bzw. zur Kommissioniervorrichtung 14 oder Blockvorrichtung 6 gefördert werden, wobei dann diese Transportträger wiederum zirkulieren bzw. in einem (separaten) Kreislauf gefördert werden.

Nachfolgend wird die zweite Ausführungsform der vorschlagsgemäßen Anlage 1 anhand von Fig. 3 näher erläutert. Hierbei wird lediglich auf wesentliche Unterschiede näher eingegangen, so dass die bisherigen Ausführungen und Erläuterungen insbesondere ergänzend oder entsprechend gelten, auch ohne explizite Wiederholung.

Bei der zweiten Ausführungsform werden nach dem Abblocken für den Weitertransport der abgeblockten Linsen 2 vorzugsweise die Transportträger 13 des Zusatztyps eingesetzt bzw. verwendet.

Die Transportträger 12 des Standardtyps bzw. ursprünglich für den Transport der Linsen 2 verwendeten Transportträger 12 werden dann vorzugsweise direkt von oder nach der Abblockvorrichtung 8 wieder rückgefördert. Der Kreislauf K1 der Transportträger 12 verläuft hier also insbesondere ausgehend von der Kommissioniervorrichtung 14 über die optionale Vorrichtung 23 zum Aufbringen der Schutzschicht bzw. -folie 5, die Blockvorrichtung 6, die Bearbeitungsvorrichtungen 7 bzw. Bearbeitungslinien B1, B2, die Abblockvorrichtung(en) 8 und die optionale Vorrichtung 19 wieder zurück zu der Kommissioniervorrichtung 14.

Die zusätzlichen Transportträger 13 bzw. Transportträger 13 des Zusatztyps zirkulieren vorzugsweise durch die dritte Bearbeitungslinie B3 bzw. Nachbearbeitung.

Die Transportträger 12, 13 können grundsätzlich auch mit einer Abdeckung oder einem Deckel oder dergleichen versehen sein, um die Linsen 2 vor Verschmutzung zu schützen. Dies ist insbesondere für die zusätzlichen Transportträger 13 beim Transport bzw. bei der Förderrung von bereits für eine anschließende Beschichtung gereinigten Linsen 2 oder dergleichen vorteilhaft. Diese geschützte Förderung bzw. diese Ausführung der Transportträger 12, 13 zum Schutz der Linsen 2 stellt einen insbesondere auch unabhängig realisierbaren Aspekt der vorliegenden Erfindung dar.

Insbesondere weist die Anlage 1 eine Rückfördervorrichtung 20 zur Rückförderung der Transportträger 13 von der Abgabevorrichtung 10 zu der Abblockvorrichtung 8 bzw. den Abblockvorrichtungen 8 auf.

Für die zusätzlichen Transportträger 13 des Zusatztyps wird vorzugsweise also ein (zweiter) Kreislauf K2 ermöglicht oder realisiert, der ausgehend von der Abgabevorrichtung 10 über eine optionale Vorrichtung 21, die Abblockvorrichtung(en) 8 und die weiteren Bearbeitungsvorrichtungen 9 bzw. weitere Bearbeitungslinie B3 wieder zu der Abgabevorrichtung 10 verläuft.

Die zusätzlichen Transportträger 13 werden vorzugsweise gereinigt und/oder insbesondere optisch überprüft. Dies erfolgt besonders bevorzugt in der optionalen Vorrichtung 21, die insbesondere in die Rückfördervorrichtung 20 integriert oder dieser zugeordnet ist.

Das Reinigen der Linsenträger 13 nach der Benutzung kann wahlweise in der Abgabevorrichtung 10, der optionalen Vorrichtung 21 oder der (jeweiligen) Abblockvorrichtung 8 erfolgen.

Das insbesondere optische Überprüfen der zusätzlichen Transportträger 13, insbesondere im Hinblick auf eine erfolgreich durchgeführte oder erforderliche Reinigung, auf das Austauschen oder Entfernen der Informationsträger 22, das Vorliegen von Beschädigungen, Verschmutzungen oder dergleichen, kann wahlweise in der Abgabevorrichtung 10, der optionalen Vorrichtung 21 oder der (jeweiligen) Abblockvorrichtung 8 erfolgen.

Die zusätzlichen Transportträger 13 sind vorzugsweise ebenfalls mit Informationsträgern 22 versehen oder ausrüstbar, wie bereits für die Transportträger 12 des Standardtyps erläutert, so dass die diesbezüglichen Ausführungen und Erläuterungen insbesondere entsprechend auch für die zusätzlichen Transportträger 13 gelten. Die Informationen der Informationsträger 22 der Transportträger 13 können dann beispielsweise in der jeweiligen Abblockvorrichtung 8, insbesondere also beim Bestücken mit zu bearbeitenden Linsen 2, ausgetauscht, festgelegt, aktualisiert oder geändert werden.

Generell werden die Informationen der Informationsträger 22 von den Bearbeitungsvorrichtungen 7, 9 vorzugsweise gelesen, verwendet, geändert und/oder angepasst. Beispielsweise können aktuelle Bearbeitungsstati und/oder Eigenschaften bezüglich der Linsen 2 und/oder Blockstücke 3 gespeichert oder bereitgestellt werden.

Besonders bevorzugt enthalten die Informationen bzw. Informationsträger 22 eine Auftragsnummer, über die alle wesentlichen Informationen über die jeweiligen Linsen 2 und/oder Blockstücke 3 bzw. alle für die Bearbeitung wesentlichen Informationen und/oder ein Bearbeitungsstatus oder dergleichen von einzelnen Vorrichtungen, insbesondere den die Bearbeitung ausführenden Bearbeitungsvorrichtungen 7, 9 abrufbar sind. Diese Informationen werden beispielsweise von einem nicht dargestellten Linsenmanagementsystem, einer Datenbank oder dergleichen verwaltet, bereitgehalten und/oder abgerufen.

Insbesondere bei der zweiten Ausführungsform bietet es sich als eine Alternative - auch unabhängig von der weiteren Förderung bzw. Bearbeitung der Linsen 2 - an, die abgeblockten Blockstücke 3 mittels der Transportträger 12 von der jeweiligen Abblockvorrichtung 8 wieder rückzufördern, hier insbesondere zu der Kommissioniervorrichtung 14. In diesem Fall kann die separate Rückförderung der Blockstücke 3 bzw. die Rückfördervorrichtung 17 entfallen. Insbesondere wird so ein zumindest im Wesentlichen identischer oder gemeinsamer Kreislauf K1 für die Transportträger 12 und Blockstücke 3 gebildet oder ermöglicht.

Es ist anzumerken, dass die Förderungen, insbesondere durch das Transportsystem 11 und/oder die Rückfördervorrichtungen 15, 17 und/oder 20 besonders bevorzugt vollautomatisiert erfolgen, aber auch teilautomatisiert erfolgen können. Generell ist anzumerken, dass die vorschlagsgemäßen Verfahren und vorschlagsgemäßen Anlagen 1 insbesondere ein Zirkulieren bzw. wahlweises Zufördern der Linsen 2 bzw. Linsenträger 12, 13 zu den einzelnen Bearbeitungsvorrichtungen 7, 9 bzw. verschiedenen Bearbeitungslinien B ermöglichen, wie insbesondere in der WO 2013/131656 A2 und/oder WO 2017/080639 beschrieben.

### Bezugszeichenliste

- 1: Anlage
- 2: Linse
- 2A: Blockseite
- 3: Blockstück
- 4: Blockmaterial
- 5: Schutzschicht/Schutzfolie
- 6: Blockvorrichtung
- 7: Bearbeitungsvorrichtung
- 8: Abblockvorrichtung
- 9: weitere Bearbeitungsvorrichtung
- 10: Abgabevorrichtung
- 11: Transportsystem
- 12: Transportträger
- 13: Transportträger
- 14: Kommissioniervorrichtung
- 15: Rückfördervorrichtung für Transportträger
- 16: Speichervorrichtung
- 17: Rückfördervorrichtung für Blockstücke
- 18: Vorrichtung
- 19: Vorrichtung
- 20: Rückfördervorrichtung für zusätzliche Transportträger
- 21: optionale Vorrichtung
- 22: Informationsträger
- 23: Vorrichtung zum Aufbringen der Schutzschicht
- 24: Vorrichtung zum Entfernen der Schutzschicht

- B: Bearbeitungslinie
- B1: erste Bearbeitungslinie
- B2: zweite Bearbeitungslinie
- B3: weitere Bearbeitungslinie
- K1: erster Kreislauf
- K2: zweiter Kreislauf
- K3: dritter Kreislauf

## Patentansprüche

1. Anlage (1) zur Bearbeitung von Linsen (2), insbesondere Brillengläsern,
mit einer Blockvorrichtung (6) zum Blocken einer zu bearbeitenden Linse (2) an einem Blockstück (3) mittels eines Blockmaterials (4),
mit mehreren Bearbeitungsvorrichtungen (7, 9) zur Bearbeitung der Linsen (2),
mit einer Abblockvorrichtung (8) zum Abblocken der bearbeiteten Linsen (2), und
mit einem Transportsystem (11) zur Förderung der Linsen (2) in oder auf Transportträgern (12, 13),
**dadurch gekennzeichnet,**
**dass** die Anlage (1) einen ersten und/oder zweiten Kreislauf (K1, K2) für die Transportträger (12, 13) und einen weiteren bzw. dritten Kreislauf (K3) für die Blockstücke (3) bildet bzw. aufweist.

2. Anlage nach Anspruch 1, **dadurch gekennzeichnet, dass** der erste Kreislauf (K1) für die Transportträger (12) ausgehend von einer Kommissioniervorrichtung (14) zur Bestückung der Transportträger (12) mit zu bearbeitenden Linsen (2) und Blockstücken (3) über eine optionale Vorrichtung (23) zum Aufbringen einer Schutzschicht bzw. Schutzfolie (5), die Blockvorrichtung (6), die Bearbeitungsvorrichtungen (7), die Abblockvorrichtung (8) und eine optionale Vorrichtung (19) zur optischen Überprüfung der Transportträger (12) wieder zurück zu der Kommissioniervorrichtung (14) verläuft.

3. Anlage nach Anspruch 1 oder 2, **dadurch gekennzeichnet, dass** die Anlage (1) mindestens eine aus mehreren Bearbeitungsvorrichtungen (7) gebildete Bearbeitungslinie (B1, B2) zur Bearbeitung von geblockten Linsen (2), insbesondere zur formgebenden Bearbeitung wenigstens einer Flachseite und/oder zum Polieren, und mindestens eine weitere Bearbeitungslinie (B3) zur weiteren Bearbeitung von ungeblockten Linsen (2), insbesondere zum Reinigen, zum Beschichten, zur Randbearbeitung, zum Prüfen und/oder zum Verpacken, aufweist.

4. Anlage nach Anspruch 3, **dadurch gekennzeichnet, dass** die Anlage (1) zum Zirkulieren der Transportträger (12) und/oder geblockten Linsen (2) in der ersten und/oder zweiten Bearbeitungslinie (B1, B2) und/oder zum Zirkulieren der Transportträger (13) und/oder abgeblockten Linsen (2) in der weiteren Bearbeitungslinie (B3) ausgebildet ist.

5. Anlage nach einem der voranstehenden Ansprüche, **dadurch gekennzeichnet, dass** die Anlage (1) eine Abgabevorrichtung (10) zur Verpackung, Beschriftung, Zwischenspeicherung und/oder Abgabe von bearbeiteten Linsen (2) aufweist.

6. Anlage nach Anspruch 3 und 5, **dadurch gekennzeichnet, dass** ein zweiter Kreislauf (K2) für Transportträger (13) eines Zusatztyps realisiert ist, der ausgehend von der Abgabevorrichtung (10) über eine optionale Vorrichtung 21 zum Reinigen und/oder optischen Überprüfen der Transportträger (13) des Zusatztyps, die Abblockvorrichtung (8) und die weitere Bearbeitungslinie (B3) wieder zu der Abgabevorrichtung (10) verläuft.

7. Anlage nach einem der voranstehenden Ansprüche, **dadurch gekennzeichnet, dass** die Transportträger (12, 13) kistenartig und/oder nach oben hin offen und/oder zur losen Aufnahme bzw. Halterung der Linsen (2) und/oder Blockstücke (3) ausgebildet sind.

8. Anlage nach einem der voranstehenden Ansprüche, **dadurch gekennzeichnet, dass** unterschiedliche Arten von Transportträgern (12, 13) eingesetzt werden, nämlich Transportträger (12) eines Standardtyps und Transportträger (13) eines Zusatztyps.

9. Anlage nach Anspruch 8, **dadurch gekennzeichnet,**
**dass** die Transportträger (12) des Standardtyps sowohl zur Aufnahme mindestens einer Linse (2) als auch mindestens eines Blockstücks (3), besonders bevorzugt eines Paars von Linsen (2) und von zwei Blockstücken (3), ausgebildet sind, und/oder
**dass** die Transportträger (13) des Zusatztyps kleiner als die Transportträger (12) des Standardtyps sind und/oder nur zur Aufnahme von ein oder zwei ungeblockten Linsen (2) ausgebildet sind.

10. Anlage nach einem Anspruch 8 oder 9, **dadurch gekennzeichnet, dass** zwei getrennte Kreisläufe (K1, K2) für die Transportträger (12) des Standardtyps einerseits und die Transportträger (13) des Zusatztyps andererseits gebildet werden.

11. Anlage nach einem der voranstehenden Ansprüche, **dadurch gekennzeichnet, dass** nach einem Abblocken für einen Weitertransport der abgeblockten Linsen (2) Transportträger (13) eines Zusatztyps eingesetzt werden.

12. Anlage nach einem der voranstehenden Ansprüche, **dadurch gekennzeichnet, dass** die Anlage (1), Blockvorrichtung (6) oder Abblockvorrichtung (8) Folgendes aufweist:
- eine Vorrichtung (19, 21) zum Reinigen der Transportträger (12, 13), und/oder
- eine Vorrichtung (19) zur optischen Überprüfung der Transportträger (12), und/oder
- eine Vorrichtung (18) zur optischen Überprüfung der Blockstücke (3), und/oder
- eine Vorrichtung (16) zum Speichern der Blockstücke (3), und/oder
- eine Vorrichtung (18) zur Sortierung der Blockstücke (3) nach Größe und/oder Form, und/oder
- eine Vorrichtung (24) zum Entfernen einer Schutzschicht oder Schutzfolie (5) von den Linsen (2), insbesondere deren Blockseite (2A), und/oder
- eine Vorrichtung (23) zum Aufbringen einer Schutzschicht oder Schutzfolie (5) auf die Linsen (2), insbesondere deren Blockseite (2A).

13. Verfahren zur Bearbeitung von Linsen (2), insbesondere Brillengläsern,
mit einer Anlage nach einem der voranstehenden Ansprüche, wobei die Linsen (2) von Bearbeitungsvorrichtungen (7, 9) bearbeitet werden, wobei jede Linse (2) für die Bearbeitung an einem Blockstück (3) mittels eines Blockmaterials (4) in einer Blockvorrichtung (6) geblockt und nach der Bearbeitung von dem Blockstück (3) in einer Abblockvorrichtung (8) wieder abgeblockt wird,
**dadurch gekennzeichnet,**
**dass** Transportträger (12, 13) in einem Kreislauf (K1, K2) und die Blockstücke (3) in einem weiteren bzw. separaten Kreislauf (K3) gefördert bzw. rückgefördert werden.

14. Verfahren nach Anspruch 13, **dadurch gekennzeichnet, dass** unterschiedliche Arten von Transportträgern (12, 13) eingesetzt werden, nämlich Transportträger (12) eines Standardtyps und Transportträger (13) eines Zusatztyps, wobei zwei getrennte Kreisläufe (K1, K2) für die Transportträger (12) des Standardtyps einerseits und die Transportträger (13) des Zusatztyps andererseits gebildet werden, vorzugsweise wobei die Transportträger (12) des Standardtyps sowohl zur Aufnahme mindestens einer Linse (2) als auch mindestens eines Blockstücks (3), besonders bevorzugt eines Paars von Linsen (2) und von zwei Blockstücken (3), ausgebildet sind und die Transportträger (13) des Zusatztyps kleiner als die Transportträger (12) des Standardtyps sind und/oder nur zur Aufnahme von ein oder zwei ungeblockten Linsen (2) ausgebildet sind.

15. Verfahren nach Anspruch 13 oder 14, **dadurch gekennzeichnet, dass** die Transportträger (12, 13) mit Informationen bzw. Informationsträgern (22) bezüglich der Bearbeitung der jeweiligen Linsen (2) versehen werden, insbesondere wobei die Informationen von den Bearbeitungsvorrichtungen (7, 9) gelesen, verwendet, geändert und/oder angepasst werden.

## Claims

1. Installation (1) for processing lenses (2), in particular spectacle lenses,
with a blocking apparatus (6) for blocking a lens (2) to be processed on a block piece (3) by means of a blocking material (4),
with a plurality of processing apparatuses (7, 9) for processing the lenses (2),
with a deblocking apparatus (8) for deblocking the processed lenses (2), and
with a transport system (11) for conveying the lenses (2) in or on transport carriers (12, 13),
**characterized in that**
the installation (1) forms and/or has a first and/or second circuit (K1, K2) for the transport carriers (12, 13) and a further and/or third circuit (K3) for the block pieces (3).

2. Installation according to claim 1, **characterized in that** the first circuit (K1) for the transport carriers (12), starting from a commissioning apparatus (14) for equipping the transport carriers (12) with lenses (2) to be processed and block pieces (3), returns to the commissioning apparatus (14) again via an optional apparatus (23) for applying a protective layer and/or protective film (5), the blocking apparatus (6), the processing apparatuses (7), the deblocking apparatus (8) and an optional apparatus (19) for optical examination of the transport carriers (12).

3. Installation according to claim 1 or 2, **characterized in that** the installation (1) has at least one processing line (B1, B2) formed from a plurality of processing apparatuses (7) for processing blocked lenses (2), in particular for shaping processing at least one flat side and/or for polishing, and at least one further processing line (B3) for further processing unblocked lenses (2), in particular for cleaning, for coating, for edge processing, for examining and/or for packaging.

4. Installation according to claim 3, **characterized in that** the installation (1) is configured for circulating the transport carriers (12) and/or blocked lenses (2) in the first and/or second processing line (B1, B2) and/or for circulating the transport carriers (13) and/or deblocked lenses (2) in the further processing line (B3).

5. Installation according to one of the preceding claims, **characterized in that** the installation (1) has a dispensing apparatus (10) for packaging, labelling, intermediate storage and/or dispensing processed lenses (2).

6. Installation according to claim 3 and 5, **characterized in that** a second circuit (K2) for transport carriers (13) of an additional type is realized, which, starting from the dispensing apparatus (10), returns to the dispensing apparatus (10) again via an optional apparatus (21) for cleaning and/or optical examination of the transport carriers (13) of the additional type, the deblocking apparatus (8) and the further processing line (B3).

7. Installation according to one of the preceding claims, **characterized in that** the transport carriers (12, 13) are configured in a crate-like and/or upwardly open manner and/or for loosely receiving and/or holding the lenses (2) and/or block pieces (3).

8. Installation according to one of the preceding claims, **characterized in that** different types of transport carriers (12, 13) are used, namely transport carriers (12) of a standard type and transport carriers (13) of an additional type.

9. Installation according to claim 8, **characterized in that**
the transport carriers (12) of the standard type are configured both for receiving at least one lens (2) and at least one blocking piece (3), particularly preferably a pair of lenses (2) and two blocking pieces (3), and/or
the transport carriers (13) of the additional type are smaller than the transport carriers (12) of the standard type and/or are configured only for receiving one or two unblocked lenses (2).

10. Installation according to claim 8 or 9, **characterized in that** two separate circuits (K1, K2) for the transport carriers (12) of the standard type on the one hand and the transport carriers (13) of the additional type on the other hand are formed.

11. Installation according to one of the preceding claims, **characterized in that** after deblocking for further transport of the deblocked lenses (2) transport carriers (13) of an additional type are used.

12. Installation according to one of the preceding claims, **characterized in that** the installation (1), blocking apparatus (6) or deblocking apparatus (8) has the following:
- an apparatus (19, 21) for cleaning the transport carriers (12, 13), and/or
- an apparatus (19) for optical examination of the transport carriers (12), and/or
- an apparatus (18) for optical examination of the block pieces (3), and/or
- an apparatus (16) for storing the block pieces (3), and/or
- an apparatus (18) for sorting the block pieces (3) according to size and/or shape, and/or
- an apparatus (24) for removing a protective layer or protective film (5) from the lenses (2), in particular the blocking side (2A) thereof, and/or
- an apparatus (23) for applying a protective layer or protective film (5) to the lenses (2), in particular the blocking side (2A) thereof.

13. Method for processing lenses (2), in particular spectacle lenses, with an installation according to one of the preceding claims, wherein the lenses (2) are processed by processing apparatuses (7, 9), wherein each lens (2) for processing is blocked on a block piece (3) by means of a blocking material (4) in a blocking apparatus (6) and after processing is deblocked again from the block piece (3) in a deblocking apparatus (8),
**characterized in that**
the transport carriers (12, 13) are conveyed and/or return-conveyed in a circuit (K1, K2) and the block pieces (3) are conveyed and/or return-conveyed in a further and/or separate circuit (K3).

14. Method according to claim 13, **characterized in that** different types of transport carriers (12, 13) are used, namely transport carriers (12) of a standard type and transport carriers (13) of an additional type, wherein two separate circuits (K1, K2) for the transport carriers (12) of the standard type on the one hand and the transport carriers (13) of the additional type on the other hand are formed, preferably wherein the transport carriers (12) of the standard type are configured both for receiving at least one lens (2) and at least one blocking piece (3), particularly preferably a pair of lenses (2) and two blocking pieces (3), and the transport carriers (13) of the additional type are smaller than the transport carriers (12) of the standard type and/or are configured only for receiving one or two unblocked lenses (2).

15. Method according to claim 13 or 14, **characterized in that** the transport carriers (12, 13) are provided with information and/or information carriers (22) with respect to the processing of the respective lenses (2), in particular wherein the information is read, used, changed and/or adapted by the processing apparatuses (7, 9).

## Revendications

1. Installation (1) pour l'usinage de lentilles (2), en particulier de verres de lunettes,
comprenant un dispositif de blocage (6) pour bloquer une lentille (2) à usiner sur une pièce de blocage (3) au moyen d'un matériau de blocage (4),
comprenant plusieurs dispositifs d'usinage (7, 9) pour l'usinage des lentilles (2), comprenant un dispositif de déblocage (8) pour débloquer les lentilles (2) usinées, et
comprenant un système de transport (11) pour le transport des lentilles (2) dans ou sur des supports de transport (12, 13),
**caractérisée en ce que**
l'installation (1) forme ou présente un premier et/ou un deuxième circuit (K1, K2) pour les supports de transport (12, 13) et un autre et/ou un troisième circuit (K3) pour les pièces de blocage (3).

2. Installation selon la revendication 1, **caractérisée en ce que** le premier circuit (K1) pour les supports de transport (12) partant d'un dispositif de préparation de commande (14) pour l'équipement des supports de transport (12) avec des lentilles (2) et des pièces de blocage (3) à usiner par le biais d'un dispositif optionnel (23) pour l'application d'une couche protectrice et/ou d'un film protecteur (5), le dispositif de blocage (6), les dispositifs d'usinage (7), le dispositif de déblocage (8) et un dispositif optionnel (19) pour le contrôle optique des supports de transport (12) s'étend à nouveau vers le dispositif de préparation de commande (14).

3. Installation selon la revendication 1 ou 2, **caractérisée en ce que** l'installation (1) présente au moins une ligne d'usinage (B1, B2) formée par plusieurs dispositifs d'usinage (7) pour l'usinage de lentilles bloquées (2), en particulier pour l'usinage de mise en forme d'au moins un côté plat et/ou pour le polissage, et au moins une autre ligne d'usinage (B3) pour l'usinage supplémentaire de lentilles débloquées (2), en particulier pour le nettoyage, pour le revêtement, pour l'usinage des bords, pour le contrôle et/ou pour l'emballage.

4. Installation selon la revendication 3, **caractérisée en ce que** l'installation (1) est réalisée pour la circulation des supports de transport (12) et/ou des lentilles bloquées (2) dans la première et/ou la deuxième ligne d'usinage (B1, B2) et/ou pour la circulation des supports de transport (13) et/ou des lentilles débloquées (2) dans l'autre ligne d'usinage (B3).

5. Installation selon l'une quelconque des revendications précédentes, **caractérisée en ce que** l'installation (1) présente un dispositif de distribution (10) pour l'emballage, l'inscription, le stockage intermédiaire et/ou la distribution de lentilles (2) usinées.

6. Installation selon la revendication 3 et 5, **caractérisée en ce qu'**un deuxième circuit (K2) pour des supports de transport (13) d'un type supplémentaire est réalisé, lequel s'étend à partir du dispositif de distribution (10) par le biais d'un dispositif optionnel (21) pour le nettoyage et/ou le contrôle optique des supports de transport (13) du type supplémentaire, le dispositif de déblocage (8) et l'autre ligne d'usinage (B3) à nouveau vers le dispositif de distribution (10).

7. Installation selon l'une quelconque des revendications précédentes, **caractérisée en ce que** les supports de transport (12, 13) sont réalisés en forme de caisse et/ou ouverts vers le haut et/ou pour la réception et/ou le maintien lâche des lentilles (2) et/ou des pièces de blocage (3).

8. Installation selon l'une quelconque des revendications précédentes, **caractérisée en ce que** différents types de supports de transport (12, 13) sont utilisés, à savoir des supports de transport (12) d'un type standard et des supports de transport (13) d'un type supplémentaire.

9. Installation selon la revendication 8, **caractérisée en ce que**
les supports de transport (12) du type standard sont réalisés aussi bien pour la réception d'au moins une lentille (2) que d'au moins une pièce de blocage (3), de manière particulièrement préférée d'une paire de lentilles (2) et de deux pièces de blocage (3), et/ou
les supports de transport (13) du type supplémentaire sont plus petits que les supports de transport (12) du type standard et/ou sont réalisés seulement pour la réception d'une ou de deux lentilles débloquées (2).

10. Installation selon la revendication 8 ou 9, **caractérisée en ce que** deux circuits séparés (K1, K2) pour les supports de transport (12) du type standard d'une part et les supports de transport (13) du type supplémentaire d'autre part sont formés.

11. Installation selon l'une quelconque des revendications précédentes, **caractérisée en ce que** des supports de transport (13) d'un type supplémentaire sont utilisés après un déblocage pour un transport ultérieur des lentilles (2) débloquées.

12. Installation selon l'une quelconque des revendications précédentes, **caractérisée en ce que** l'installation (1), le dispositif de blocage (6) ou le dispositif de déblocage (8) présente ce qui suit:
- un dispositif (19, 21) pour le nettoyage des supports de transport (12, 13), et/ou
- un dispositif (19) pour le contrôle optique des supports de transport (12), et/ou
- un dispositif (18) pour le contrôle optique des pièces de blocage (3), et/ou
- un dispositif (16) pour le stockage des pièces de blocage (3), et/ou
- un dispositif (18) pour le tri des pièces de blocage (3) selon la taille et/ou la forme, et/ou
- un dispositif (24) pour l'enlèvement d'une couche de protection ou d'une feuille de protection (5) des lentilles (2), en particulier de leur face de blocage (2A), et/ou
- un dispositif (23) pour l'application d'une couche de protection ou d'une feuille de protection (5) sur les lentilles (2), en particulier leur face de blocage (2A).

13. Procédé pour l'usinage de lentilles (2), en particulier de verres de lunettes, avec une installation selon l'une quelconque des revendications précédentes, dans lequel les lentilles (2) sont usinées par des dispositifs d'usinage (7, 9), dans lequel chaque lentille (2) est bloquée pour l'usinage sur une pièce de blocage (3) au moyen d'un matériau de blocage (4) dans un dispositif de blocage (6) et est de nouveau débloquée après l'usinage de la pièce de blocage (3) dans un dispositif de déblocage (8),
**caractérisé en ce que**
les supports de transport (12, 13) sont transportés et/ou ramenés dans un circuit (K1, K2) et les pièces de blocage (3) sont transportées et/ou ramenés dans un autre et/ou un circuit séparé (K3).

14. Procédé selon la revendication 13, **caractérisé en ce que** différents types de supports de transport (12, 13) sont utilisés, à savoir des supports de transport (12) d'un type standard et des supports de transport (13) d'un type supplémentaire, dans lequel deux circuits séparés (K1, K2) pour les supports de transport (12) du type standard d'une part et les supports de transport (13) du type supplémentaire d'autre part sont formés, de préférence dans lequel les supports de transport (12) du type standard sont réalisés aussi bien pour la réception d'au moins une lentille (2) que d'au moins une pièce de blocage (3), de manière particulièrement préférée d'une paire de lentilles (2) et de deux pièces de blocage (3), et les supports de transport (13) du type supplémentaire sont plus petits que les supports de transport (12) du type standard et/ou sont réalisés seulement pour la réception d'une ou de deux lentilles non bloquées (2).

15. Procédé selon la revendication 13 ou 14, **caractérisé en ce que** les supports de transport (12, 13) sont pourvus d'informations et/ou de supports d'informations (22) concernant l'usinage des lentilles respectives (2), en particulier dans lequel les informations sont lues, utilisées, modifiées et/ou adaptées par les dispositifs d'usinage (7, 9).
